(19) Europäisches Patentamt
European Patent Office
Office européen des brevets

(11) Publication number: 0 165 794
A2

(12) EUROPEAN PATENT APPLICATION

(21) Application number: 85304308.1

(51) Int. Cl.[4]: H 01 M 6/16

(22) Date of filing: 17.06.85

(30) Priority: 18.06.84 US 621349

(43) Date of publication of application: 27.12.85 Bulletin 85/52

(84) Designated Contracting States: DE FR GB

(71) Applicant: EASTMAN KODAK COMPANY
343 State Street
Rochester New York 14650(US)

(72) Inventor: Martin, Thomas W.
Kodak Park
Rochester New York(US)

(72) Inventor: Muehlbauer, Peter J.
Kodak Park
Rochester New York(US)

(72) Inventor: Pan, Kee-Chuan
Kodak Park
Rochester New York(US)

(74) Representative: Davis, Ian Ellison et al,
Kodak Limited Patent Departement Headstone Drive
Harrow Middlesex HA1 4TY(GB)

(54) **Light metal (CFx)n electrochemical cells having high current density and high power density.**

(57) An electrochemical cell comprising a light metal anode, a $(CF_x)_n$ cathode, wherein x is equal to or less than 1.2 and n is an indeterminately large number, and an electrolyte which a) has an electrical conductance of at least $5 \times 10^{-3}$ $ohm^{-1}$ $cm^{-1}$, b) has a contact angle with the cathode of 40° or less. and c) comprises a lithium salt, selected from the group consisting of $LiClO_4$, $LiAsF_6$ and $LiAlCl_4$ dissolved in a solvent blend of

i) at least 40 volume percent of an anhydrous, aprotic organic liquid having a surface tension of less than 25 dynes/cm and a molecular weight of 40-120; and

ii) up to 60 volume percent of an anhydrous organic liquid having a dielectric constant of at least 25.

EP 0 165 794 A2

0165794

# LIGHT METAL/$(CF_x)_n$ ELECTROCHEMICAL CELLS HAVING HIGH CURRENT DENSITY AND HIGH POWER DENSITY

The present invention relates to electrochemical cells having improved electrolytes comprising light metal anodes and poly(carbon monofluoride) cathodes.

Electrochemical cells, such as those disclosed in U.S. patent 3,700,502 and U.S. patent 3,536,532 are used in many portable devices requiring electrical power. Such devices include cameras that use motors for film advance and electronic flash units for supplemental light.

Commercial embodiments of the electrochemical cells disclosed in the aforementioned U.S. patents comprise a lithium anode and a cathode structure comprising a dispersion of poly(carbon monofluoride), hereinafter referred to as $(CF_x)_n$, carbon and a non-adhesive binder, poly(tetrafluoroethylene), hereinafter referred to as Teflon ('Teflon' is a trade mark), molded to a titanium grid. The electrolyte is 1 M $LiBF_4$ in γ-butyrolactone. These electrochemical cells generally have a limiting current density of about 50-60 milliamperes per square centimeter ($mA/cm^2$) and maximum power density of about 29-35 milliwatts per square centimeter ($mW/cm^2$).

The problem is that greater limiting current densities and maximum power densities are needed for certain high power applications and for more rapidly charging electronic flashes in cameras, turning motors in cameras or tape recorders, setting off emergency alarms or providing emergency lighting.

The objective of this invention is to provide electrochemical cells of the above type having improved limiting current density and improved maximum power density.

## SUMMARY OF THE INVENTION

We have achieved the foregoing objective providing an electrochemical cell comprising a light metal anode, a $(CF_x)_n$ cathode, wherein x is equal to or less than 1.2 and n is a indeterminately large number, and an electrolyte which a) has an electrical conductance of at least $5 \times 10^{-3}$ $ohm^{-1}$ $cm^{-1}$, b) has a contact angle with the cathode of 40° or less, and c) comprises a lithium salt, selected from the group consisting of $LiClO_4$, $LiAsF_6$ and $LiAlCl_4$ dissolved in a solvent blend of

i) at least 40 volume percent of an anhydrous, aprotic organic liquid having a surface tension of less than 25 dynes/cm and a molecular weight of 40-120; and

ii) up to 60 volume percent of an anhydrous organic liquid having a dielectric constant of at least 25.

By light metals we mean alkali metals, alkaline earth metals and aluminum. Lithium is preferred.

The foregoing electrochemical cell makes possible an unexpected increase in limiting current density ($i_\ell$) and in maximum power density ($P_E$). Other unexpected improvements provided by the electrochemical cell of this invention are increases in coulombs and joules extracted, increases in energy density and increases in energy per unit volume of cathode and per unit volume of the entire cell.

The magnitude of the foregoing improvements are unexpected compared to the Matsushita commercial size 2/3 A-cell and in view of the fact that it is known in the electrochemical cell art that it is practically impossible to predict in advance how well, if at all, a nonaqueous electrolyte will function with a selected anode/cathode coupler. An electrochemical cell is a unit having at least three parts, a cathode, an anode and an electrolyte. It is well understood that the parts of one cell are not predictably interchangeable with parts of another cell to produce an efficient and workable cell.

DETAILS OF THE INVENTION

The improved electrolytes which make possible the unexpected improvement and performance of the aforementioned electrochemical cells are prepared by dissolving anhydrous $LiClO_4$, $LiAsF_6$ and/or $LiAlCl_4$ in an aprotic organic solvent or solvent mixture to produce an electrolyte which gives a contact angle with a $(CF_x)_n$ cathode of 40° or less. In the case of a mixture, at least one of the aprotic solvents should have a molecular weight in the range of 40-120. After the selected lithium salt has fully dissolved, the anhydrous liquid having a dielectric constant of at least 25 is then added. Sufficient lithium salt is dissolved in the blend to provide a conductance of at least $5 \times 10^{-3}$ $ohm^{-1}$ $cm^{-1}$.

The conductance of the final electrolyte can be measured in a variety of ways, as for example, with a Model 212 Wescan conductivity meter equipped with a dip cell. The contact angle of the aprotic solvent and of the final electrolyte with the $(CF_x)_n$ cathode can be easily determined using a magnifying lens and an illuminated background. The magnifying lens should have a power of at least 10X.

In order to obtain the appropriate contact angle for use in the present invention, it is necessary that the electrolyte contain at least 40 volume percent of the described anhydrous aprotic organic liquid. The presence of the latter organic liquid insures the proper contact angle and thus, increases wetting of the $(CF_x)_n$ cathode compared to an electrolyte containing less of the described liquid. Examples of useful aprotic organic liquids having the requisite surface tension and molecular weight include methyl acetate, ethyl acetate, isopropyl acetate, methyl formate, ethyl formate, ethyl ether and 1,2-dimethoxyethane. Other aprotic organic liquids having the required molecular weight and which could be used include methyl ethyl ketone, acetone, tetrahydrofuran and 1,2-diethoxyethane.

The second organic liquid component of the electrolyte must have a dielectric constant of at least 25 so that together with the dissolved lithium salt the required conductivity is provided. Examples of solvents or organic liquids having the required dielectric constants are propylene carbonate, γ-butyrolactone and dimethyl sulfoxide. Other organic liquids which may be tested for selection as having the appropriate dielectric constant include methanol, nitrobenzene, acetonitrile, benzonitrile, ethylene glycol, glycerol and benzene.

The preferred electrolytes of this invention are:

a) 1 Molar lithium perchlorate dissolved in a solvent blend consisting of 60 volume percent of isopropyl acetate and 40 volume percent propylene carbonate;

b) 1 Molar lithium perchlorate in a solvent blend of 60 volume percent propylene carbonate and 40 volume percent of methyl acetate;

0165794

c) 1 Molar lithium perchlorate in a solvent blend consisting of 50 volume percent of propylene carbonate and 50 volume percent of 1,2-dimethoxyethane;

d) 1 Molar lithium perchlorate in a solvent blend of 20 volume percent propylene carbonate and 80 volume percent methyl acetate;

e) 1 Molar lithium perchlorate in a solvent blend of 40 volume percent propylene carbonate and 60 volume percent methyl acetate;

f) 1.25 Molar lithium perchlorate in a solvent blend of 20 volume percent propylene carbonate and 80 volume percent methyl acetate;

g) 1.5 Molar lithium perchlorate in a solvent blend of 20 volume percent propylene carbonate and 80 volume percent 1,2-dimethoxyethane; and

h) 1.5 Molar lithium perchlorate dissolved in a solvent blend of 40 volume percent propylene carbonate and 60 volume percent 1,2-dimethoxyethane.

The $(CF_x)_n$ cathode is prepared by forming a well mixed dispersion of $(CF_x)_n$, a current carrier and a binder in a solvent, such as a mixture of isopropyl alcohol and water. The dispersion is coated on both surfaces of a current collector to the desired thickness with a spatula, coating knife or other coating means. Dry thicknesses of 0.076 to 0.254 mm are preferred. To insure adherence of the cathode dispersion to the current collector, the dispersion is adhered to the current collector under pressure. The cathodes are then thoroughly dried by heating in a vacuum oven at about 65°C until dry.

The preferred cathode-active material is $(CF_x)_n$ wherein n is an indeterminately large number and x is equal to or less than 1.2. $(CF_x)_n$ in which x is an average of 1.0 is the most preferred form. However, other forms of $(CF_x)_n$ having a different stoichiometric relationship are also useful. The $(CF_x)_n$ may be prepared according to procedures disclosed in U.S. patent 3,536,532 and U.S. patent 3,700,502. $(CF_x)_n$ is also available commercially from Allied Chemical, Air Products and Chemicals and the Ozark-Mahoning Company.

The preferred coated and dried cathode dispersion comprises from 70 to 92 weight percent $(CF_x)_n$, from 5 to 10 weight percent current carrier and from 3 to 20 weight percent binder.

The current carrier portion of the cathode dispersions may include materials such as the various forms of carbon as well as copper sulfide, chalcopyrite, pyrite and lead sulfide. Preferred current carriers are selected from the various forms of carbon.

Useful binders include any dispersable particulate material which will not dissolve in the coating solvent. This includes polymers and copolymers such as poly(vinyl acetate), Teflon, polyester- or polyol-based polyurethanes, styrenebutadiene copolymers and terpolymers, EPM and EPDM synthetic rubbers, polyolefins, poly(vinylidene fluoride) and polyamides.

Conductive foils, perforated foils and grids of metals such as stainless steel (SS), Al, Ti and Ni are useful as the current collector. Preferred current collector metals include Al, Ti and stainless steel.

The electrochemical cells of this invention can be provided in a variety of formats. Useful formats include jelly-roll construction described in "Electrochimica Acta", 21, 855 (1976); coin-type construction described in "Progess in Batteries & Solar Cells", 3, 74 (1980); button-type construction described in "Battery and Energy Systems", McGraw-Hill, p. 90, (1970); and bobbin-type construction described in "Battery and Energy Systems", McGraw-Hill, p. 35, (1970).

Commercial Matsushita Electric Co. 2/3 A-size Li/CF(x = 1) cells in a jelly-roll configuration were tested as a control for the examples of the invention which follow. The cells of the examples are also in a jelly-roll configuration. The average properties of at least two such cells are reported in Table I for each example and the control. The control cells and the cells of the invention had compressed cathode dispersions containing carbon, $(CF_x)_n$ and Teflon on a Ti grid current collector.

In the following examples electrochemical cells were prepared in a jelly-roll configuration as follows.

Cathodes, (70% CF, 10% carbon, 20% Teflon® by weight) were used to test the performance of the improved electrolytes. The cathode was prepared by pressing one layer of separator around the cathode at 165.5 MPa for one minute. The separator was one layer of spun polypropylene fabric available from Pall Trinity Micro Company. The separator was sealed along the tab edge of the cathode and trimmed at the seal. Excess separator (7 cm) was left at one end to help prevent shorting between the end of the cathode and the can when the jelly-roll was formed. The anode consisted of a piece of 0.0254 cm thick Li foil into which was impressed a 5 cm long piece of Ni grid with a welded tab; the tab provided the internal connection to the can when the jelly-roll was constructed. The actual handling of the Li foil and jelly-roll construction was carried out in a dry room maintained at 1-2% relative humidity.

The cathode was placed in a jelly-roll winder such that the taped end of the cathode would face the can when rolled. The anode end was positioned 1 cm from the end of the separator-wrapped cathode which was held in the winder. Excess separator on the inner end of the cathode (2 cm) was folded over the cathode to help prevent shorting in the center of the jelly-roll wind. A support arm was brought in to form the jelly-roll as it was wound. The cathode-anode package was rolled slowly, guiding the tabs around the center post and aligning the Li foil with the cathode as it was wound. The excess separator (7 cm) at the outer end of the cathode was wound into the jelly-roll as added protection against shorting between the end of the cathode and the can wall.

The rolled assembly was pushed into a 2/3 A-size can which contained a Teflon spacer to prevent shorting against the can bottom. A plastic washer was placed on top of the jelly-roll such that the cathode tab protruded through the center hole and the anode tab was pressed against the can. This washer was then pushed down into the can to pack the contents as much as possible. The tabs were trimmed to length and the can was crimped just above the washer to hold the roll down in the can and to form the bottom half of the cap seal. The anode tab was welded to the side of the can and the cathode tab to a Ti washer inside the cap. The cell was weighed dry, filled with electrolyte and put into a vacuum desiccator to remove trapped air (which would otherwise have prevented complete wetting of the cathode). The cap was tapped into place and the upper edge of the can crimped over to form the top half of the cap seal. The cell was weighed to determine the amount of electrolyte added. Tabs were welded to the can and cap.

Electrolytes were prepared in a Vacuum Atmospheres Corp. (VAC) Model HE-243 glove box equipped with MO-40-IV Dri Train and Ni-20 Train modules for removal of oxygen/moisture and nitrogen, respectively. Oxygen levels, monitored with a VAC AO316-H oxygen analyzer, were maintained below 10 ppm. Propylene carbonate (PC) was obtained from Burdick and Jackson Laboratories, Inc. and γ-butyrolactone (γ-BL) was supplied by Aldrich Chemical Co. Both solvents were vacuum-distilled under reduced pressure and dried over molecular sieves (5 Å, Eastman) prior to use. Methyl acetate (MA), isopropyl acetate (iPAc), and 1,2-dimethoxyethane (DME) were obtained from Eastman Chemicals, Inc., and were used as received. $LiClO_4$ was obtained from G. Frederick Smith Chemical Co. Electrolytes were prepared at 1.0 M and 1.25 M salt concentrations using volumetric flasks and stored over molecular sieves prior to use. Conductance was measured with a Model 212 Wescan Conductivity Meter equipped with a dip cell. Contact angles were determined with a magnifying lens set-up with background illumination.

Two experimental testing procedures were used to test each cell, polarization and pulsed discharge.

In the polarization test, each cell was automatically discharged through a series of 13 load resistances ranging from 10K Ω to 0.3 Ω, with 26.5 seconds at each resistance. At the end of each 26.5 second time interval, the load voltage ($V_L$) was recorded, and the following electrical properties were calculated from these data: the current (I), battery voltage ($V_B$), the battery internal resistance ($R_B$), the limiting current density ($i_\ell$), and the maximum electrical power ($P_{E,max}$).

The cells were then galvanostatically pulse-discharged at a constant current of 2.5 amps using a 10% duty cycle, i.e. pulsed with constant current for 6 seconds, followed by no current for 54 seconds, to a cutoff voltage of 1.0 volt. The following parameters were calculated from the pulsed-discharge data: the number of coulombs (C) and joules extracted during polarization and discharge, the average load voltage $\bar{V}_L$ during discharge, and the energy density in joules/gm CF, joules/$cm^3$ cathode and joules/$cm^3$ cell.

The calculations were made using the following formulas:

$$I = \frac{V_L}{R_L} \quad ;$$

$V_B$ = the reciprocal of the slope of the plot of $\frac{1}{I}$ vs. $R_L$ ;

$$R_B = \frac{V_B}{I} - R_L \quad ;$$

$$I_\ell = \frac{V_B}{R_B} \quad ;$$

$$i_\ell = \frac{I_\ell}{\text{Area of the cathode}} \;;$$

$$P_{E,max} = \frac{V_B^{\,2}}{4R_B} \quad mW/cm^2 \;.$$

$$C = I\int_o^{t_{co}} dt \;;\ \text{wherein}$$

C is the number of coulombs extracted;

I is the current, which is constant in a galvanostatic discharge;

t is the time (in seconds) in which $t_{co}$ denotes the time required to reach the cutoff voltage.

$$E = I\int_o^{t_{co}} V_L(t)\, dt \;;\ \text{wherein}$$

E is the number of joules extracted;

$V_L$ (t) is the load voltage at time t.

$\bar{V}_L$ is the average load voltage at the terminals of the battery from the inception of the discharge until $V_L = V_{co}$.

A comparison of the construction and electrical properties of a control Matsushita 2/3 A-size cell to the cells of the invention illustrated in Examples 1-6, is reported in Table I. The values reported for each example and the control are averages of at least two cells to insure reproducibility.

<u>Example 1</u> Cells Employing 1M $LiClO_4$/(2:3)-Propylene carbonate:Isopropyl acetate Electrolyte

A titanium grid-based cathode (composition CF:carbon:Teflon (70:10:20)) was completely wrapped with one layer of separator and pressed at about 165.47 MPa for 1 minute. The separator was sealed along the top of the cathode and excess trimmed away. The cathode so prepared was constructed into a jelly-roll cell using lithium foil as the anode. The electrolyte was added before the final seal was made. Metal tabs were welded to the can to provide electrical connections for the testing procedures described previously. Increases in limiting current density ($i_\ell$) of 51%, average voltage ($\bar{V}_L$) of 11%, the number of extracted coulombs of 49% and joules of 65%, and in energy density of 65% were noted for Example 1 over the control. Significant increases in energy per unit volume of cathode and of the entire cell were also noted.

<u>Example 2</u> Cells Employing 1M $LiClO_4$/(3:2)-Propylene carbonate:Methyl acetate Electrolyte

Example 2 is identical in all respects to Example 1 except that the electrolyte was as indicated. Electrolyte conductivity was 58% higher than Example 1 while the contact angle was slightly higher. Table I shows increases of 120% in $i_\ell$, 117% increase in $P_E$, 31% in $\bar{V}_L$, 63% in extracted coulombs, and 112% in energy density were obtained for Example 2 over the control.

Example 3 Cells Employing 1M $LiClO_4$/(1:1)-Propylene carbonate:1,22-Dimethoxyethane Electrolyte

Example 3 is identical to Example 1 except that the electrolyte was as indicated. The electrolyte used in this example has a slightly higher conductivity and a contact angle similar to that of the electrolyte in Example 2. Table I shows increases in $i_\ell$, $P_E$ and other properties obtained for this example over Example 2.

Example 4 Cells Employing 1M $LiClO_4$/(1:4)-Propylene carbonate:Methyl acetate Electrolyte

This example is identical to Example 1 in every respect except that here the electrolyte was as indicated. The electrolyte in this example has a low contact angle and also exhibits a high conductivity. This example clearly shows the effect of increased electrolyte conductivity while maintaining a low contact angle. Table I shows that the cells in Example 4 performed well compared to the control, yielding a 193% increase in $i_\ell$; a 192% increase in $P_E$; a 67% increase in coulombs extracted; and a 122% increase in extracted energy. Also, excellent increases were noted for energy density and joules per unit volume of cathode and of the entire cell.

Example 5 Cells Employing 1M $LiClO_4$/(2:3)-Propylene carbonate:Methyl acetate Electrolyte

This example is identical to Example 1 except that here the electrolyte was as indicated. Compared to the electrolyte in Example 1, the electrolyte employed here had a high conductivity and a similar moderate contact angle. Table I shows that increases of 150% in $i_\ell$, 149% increase in $P_E$, 35% in $\bar{V}_L$, 65% in extracted coulombs and 123% in energy density were obtained from cells in this example over the control.

Example 6 Cells Employing 1.25M $LiClO_4$/(1:4)-Propylene carbonate:Methyl acetate Electrolyte

This example was identical to Example 4 except that a higher salt concentration was used to increase electrolyte conductivity. Further increases in $i_\ell$, $\bar{V}_L$, coulombs extracted and energy density are noted over Example 4. Compared to the control, the cells in this example exhibited 225% increase in $i_\ell$, 225% increase in $P_E$, 37% increase in $\bar{V}_L$, 68% increase in the number of extracted coulombs, and 130% higher energy density.

TABLE I

Construction and Properties of Li/CF Galvanic Cells of Examples 1-6

| Example No. | Control | Examples 1 | 2 | 3 | 4 | 5 | 6 |
|---|---|---|---|---|---|---|---|
| Separator Thickness (mm) | 0.127 | .076 | .076 | .076 | .076 | .076 | .076 |
| *Electrolyte No. | 1 | 2 | 3 | 4 | 5 | 6 | 7 |
| Weight Electrolyte (g) | 2.85 | 3.42 | 3.64 | 3.49 | 3.08 | 3.14 | 3.39 |
| Electrolyte Conductance ($x10^{-3}\Omega^{-1}cm^{-1}$) | 7.0 | 7.02 | 11.1 | 12.70 | 12.15 | 12.78 | 12.54 |
| Electrolyte contact angle (°) | 44 | 25 | 34 | 37 | 10 | 24 | 12 |

TABLE I Cont'd

| Example No. | Control | Examples 1 | 2 | 3 | 4 | 5 | 6 |
|---|---|---|---|---|---|---|---|
| Polarization Test | | | | | | | |
| $V_B$ (V) | 2.32 | 2.20 | 2.29 | 2.22 | 2.31 | 2.31 | 2.32 |
| $i_\ell$ (mA/cm$^2$) | 60.4 | 91.1 | 133.0 | 143.9 | 176.8 | 151.2 | 196.3 |
| $P_E$. max (mW/cm$^2$) | 35.0 | 50.1 | 76.1 | 79.9 | 102.1 | 87.3 | 113.9 |
| Pulsed Discharge Test | | | | | | | |
| Current (Amps) | 2.5 | 2.5 | 2.5 | 2.5 | 2.5 | 2.5 | 2.5 |
| i (mA/cm$^2$) | 30.5 | 30.5 | 30.5 | 30.5 | 30.5 | 30.5 | 30.5 |
| $\overline{V}_L$ to 1.0 volt Cut off | 1.37 | 1.52 | 1.79 | 1.80 | 1.83 | 1.85 | 1.88 |
| Coulombs Extracted at $V_L > V_{CO}$ | 2570 | 3840 | 4180 | 4260 | 4290 | 4240 | 4330 |
| Joules Extracted at $V_L > V_{CO}$ | 3530 | 5840 | 7480 | 7650 | 7820 | 7860 | 8130 |

TABLE I Cont'd

| Example No. | Control | 1 | 2 | Examples 3 | 4 | 5 | 6 |
|---|---|---|---|---|---|---|---|
| Energy Density (Joules/g of $(CF_x)_n$) | 2520 | 4170 | 5340 | 5460 | 5590 | 5610 | 5810 |
| Joules/cm$^3$ Cathode | 2610 | 4310 | 5520 | 5650 | 5780 | 5810 | 6000 |
| Joules/cm$^3$ Cell | 500 | 820 | 1050 | 1070 | 1100 | 1100 | 1140 |

*Electrolyte: No. 1 is 1M $LiBF_4$/γ-butyrolactone;
No. 2 is 1M $LiClO_4$/(2:3)propylene carbonate:isopropyl acetate;
No. 3 is 1M $LiClO_4$/(3:2)propylene carbonate:methyl acetate;
No. 4 is 1M $LiClO_4$/(1:1)propylene carbonate:1,2-dimethoxyethane;
No. 5 is 1M $LiClO_4$/(1:4)propylene carbonate:methyl acetate;
No. 6 is 1M $LiClO_4$/(2:3)propylene carbonate:methyl acetate;
No. 7 is 1.25M $LiClO_4$/(1:4)propylene carbonate:methyl acetate.

CLAIMS:

1. An electrochemical cell comprising a light metal anode, a $(CF_x)_n$ cathode, wherein x is equal to or less than 1.2 and n is an indeterminately large number, and an electrolyte which a) has an electrical conductance of at least 5 $x\ 10^{-3}$ $ohm^{-1}$ $cm^{-1}$, b) has a contact angle with the cathode of 40° or less, and c) comprises a lithium salt, selected from the group consisting of $LiClO_4$, $LiAsF_6$ and $LiAlCl_4$ dissolved in a solvent blend of

i) at least 40 volume percent of an anhydrous, aprotic organic liquid having a surface tension of less than 25 dynes/cm and a molecular weight of 40-120; and

ii) up to 60 volume percent of an anhydrous organic liquid having a dielectric constant of at least 25.

2. The electrochemical cell of claim 1 wherein the light metal is lithium.

3. The electrochemical cell of claim 1 or 2 wherein

a) the anhydrous, aprotic organic liquid having a surface tension of less than 25 dynes/cm is selected from the group consisting of methyl acetate, ethyl acetate, isopropyl acetate, methyl formate, ethyl formate, ethyl ether and 1,2-dimethoxymethane; and

b) the anhydrous organic liquid having a dielectric constant of at least 25 is selected from the group consisting of propylene carbonate, γ-butyrolactone and dimethyl sulfoxide.

4. The electrochemical cell of claim 1, 2 or 3 wherein the electrolyte is selected from the group consisting of

a) 1 Molar lithium perchlorate dissolved in a solvent blend consisting of 60 volume percent of isopropyl acetate and 40 volume percent propylene carbonate;

b) 1 Molar lithium perchlorate in a solvent blend of 60 volume percent propylene carbonate and 40 volume percent of methyl acetate;

c) 1 Molar lithium perchlorate in a solvent blend consisting of 50 volume percent of propylene carbonate and 50 volume percent of 1,2-dimethoxyethane;

d) 1 Molar lithium perchlorate in a solvent blend of 20 volume percent propylene carbonate and 80 volume percent methyl acetate;

e) 1 Molar lithium perchlorate in a solvent blend of 40 volume percent propylene carbonate and 60 volume percent methyl acetate;

f) 1.25 Molar lithium perchlorate in a solvent blend of 20 volume percent propylene carbonate and 80 volume percent methyl acetate;

g) 1.5 Molar lithium perchlorate in a solvent blend of 20 volume percent propylene carbonate and 80 volume percent 1,2-dimethoxyethane; and

h) 1.5 Molar lithium perchlorate dissolved in a solvent blend of 40 volume percent propylene carbonate and 60 volume percent 1,2-dimethoxyethane.

5. The electrochemical cell of any one of claims 1 to 4 wherein x has an average value of 1.0.

6. The electrochemical cell of any one of claims 1 to 5 wherein the contact angle of the electrolyte with the cathode is in the range of 8 to 37° and the electrical conductance is in the range of 7.0 to 13.0 x $10^{-3}$ $ohm^{-1}$ $cm^{-1}$.

7. An electrochemical cell comprising a lithium anode;

a cathode comprising a current collector coated with a dispersion of 70 to 92 weight percent of $(CF_x)_n$, wherein x is equal to or less than 1.2, and n is an indeterminately large number, 5 to 10 weight percent current carrier and 3 to 20 weight percent binder.

8. The electrochemical cell of claim 7 wherein the dispersion comprises 70 weight percent of $(CF_x)_n$, 10 weight percent carbon and 20 weight percent binder.

9. An electrolyte composition selected from the group consisting of

a) 1 Molar lithium perchlorate dissolved in a solvent blend consisting of 60 volume percent of isopropyl acetate and 40 volume percent propylene carbonate;

b) 1 Molar lithium perchlorate in a solvent blend of 60 volume percent propylene carbonate and 40 volume percent of methyl acetate;

c) 1 Molar lithium perchlorate in a solvent blend of 20 volume percent propylene carbonate and 80 volume percent methyl acetate;

d) 1 Molar lithium perchlorate in a solvent blend of 40 volume percent propylene carbonate and 60 volume percent methyl acetate;

e) 1.25 Molar lithium perchlorate in a solvent blend of 20 volume percent propylene carbonate and 80 volume percent methyl acetate.